# EUROPEAN PATENT APPLICATION

(11) **EP 4 716 371 A1**
(43) Date of publication of application: **25.03.2026**
(21) Application number: 25199359.8
(22) Date of filing: 01.09.2025
(51) Int. Cl.: H05B 6/64, H05B 6/76

(54) **HEATING COOKER**

(30) Priority: 20.09.2024 JP 2024163525
(71) Applicant: Sharp Kabushiki Kaisha, Sakai City, Osaka 590-8522 (JP)
(72) Inventor: MORIMOTO, Shigenori, Sakai City 590-8522 (JP); YACHI, Mariko, Sakai City 590-8522 (JP); KITAURA, Tomohiro, Sakai City 590-8522 (JP)
(74) Representative: Treeby, Philip David William

(57) **Abstract**

A heating cooker includes a heating chamber, an imaging device, and a shutter. The heating chamber has a panel member surrounding an inner space capable of accommodating a heating object, and heats a heating object using an electromagnetic wave. The imaging device is arranged outside the heating chamber, and captures the inner space through an opening portion formed in a part of the panel member. The shutter is movable between the closed position where the shutter closes the opening portion and the open position where the shutter opens the opening portion. The shutter is electrically connected to the panel member at least when the shutter is at the closed position.

## Description

### BACKGROUND OF THE INVENTION

### 1. TECHNICAL FIELD

The present disclosure relates to a heating cooker.

### 2. DESCRIPTION OF THE RELATED ART

As a related art, a heating cooker such as a microwave oven that irradiates a heating object (object to be heated) in a heating chamber with an electromagnetic wave (microwave) to heat the heating object is known (see, for example, JP 2019-190771 A). The heating cooker according to the related art includes an imaging device (camera) that captures (shoots) the inside of the heating chamber.

The imaging device is arranged on an upper wall of the heating chamber so as to face the inside of the heating chamber, and shoots the inside of the heating chamber through an opening (top plate opening) provided in a top plate portion of the heating chamber. The upper wall of the heating chamber is provided with a wall surface opening, and a wall surface recessed portion formed in a recessed shape is provided upward from a peripheral edge of the wall surface opening. A recessed bottom portion opening which is an opening for shooting is provided at a bottom portion, that is, on the upper side, of the wall surface recessed portion. A side wall of the wall surface recessed portion has a tapered shape that narrows from the heating chamber side toward the wall surface opening side. A substantially flat plate-shaped top plate portion in which an opening (top plate opening) is formed is provided below the upper wall so as to be parallel to the upper wall. A cross-sectional area of an opening surface of the recessed bottom portion opening is smaller than a cross-sectional area of an opening surface of the wall surface opening. As described above, by making an opening portion of the recessed bottom portion opening smaller, it is possible to suppress leakage of an electromagnetic wave from the inside of the heating chamber while securing a wide visual field range.

### SUMMARY OF THE INVENTION

In the configuration of the above related art, there is a possibility that the imaging device is deteriorated by an electromagnetic wave or the like leaking from the inside of the heating chamber.

An object of the present disclosure is to provide a heating cooker in which an imaging device is less likely to deteriorate.

A heating cooker according to one aspect of the present disclosure includes a heating chamber, an imaging device, and a shutter. The heating chamber has a panel member surrounding an inner space capable of accommodating a heating object, and heats the heating object using electromagnetic waves. The imaging device is arranged outside the heating chamber and captures the inner space through an opening portion formed in a part of the panel member. The shutter is movable between a closed position where the shutter closes the opening portion and an open position where the shutter opens the opening portion. The shutter is electrically connected to the panel member at least when the shutter is at the closed position.

According to the present disclosure, it is possible to provide a heating cooker in which an imaging device is less likely to deteriorate.

### BRIEF DESCRIPTION OF THE DRAWINGS

FIG. 1 is a schematic perspective view of a heating cooker according to a first embodiment;
FIG. 2 is a schematic perspective view of a main part of the heating cooker according to the first embodiment as viewed obliquely from below;
FIG. 3 is a schematic perspective view of a main part of the heating cooker according to the first embodiment as viewed obliquely from above;
FIG. 4 is a schematic perspective view of a main part of the heating cooker according to the first embodiment;
FIG. 5 is a schematic exploded perspective view of a main part of the heating cooker according to the first embodiment;
FIG. 6 is a schematic perspective view of a main part of the heating cooker according to the first embodiment;
FIG. 7 is a schematic exploded perspective view of a main part of the heating cooker according to the first embodiment;
FIG. 8 is a schematic exploded perspective view of a main part of the heating cooker according to the first embodiment;
FIG. 9 is a schematic plan view illustrating a main part of the heating cooker according to the first embodiment;
FIG. 10 is a schematic side view illustrating a main part of the heating cooker according to the first embodiment;
FIG. 11 is a schematic perspective view of a main part of the heating cooker according to a second embodiment;
FIG. 12 is a schematic exploded perspective view of a main part of the heating cooker according to the second embodiment; and
FIG. 13 is a schematic cross-sectional perspective view of a main part of the heating cooker according to the second embodiment.

### DETAILED DESCRIPTION

Hereinafter, an embodiment of the present disclosure will be described with reference to the accompanying drawings. An embodiment below is an example embodying the present disclosure, and is not intended to limit the technical scope of the present disclosure.

### FIRST EMBODIMENT

### [1] GENERAL OUTLINE

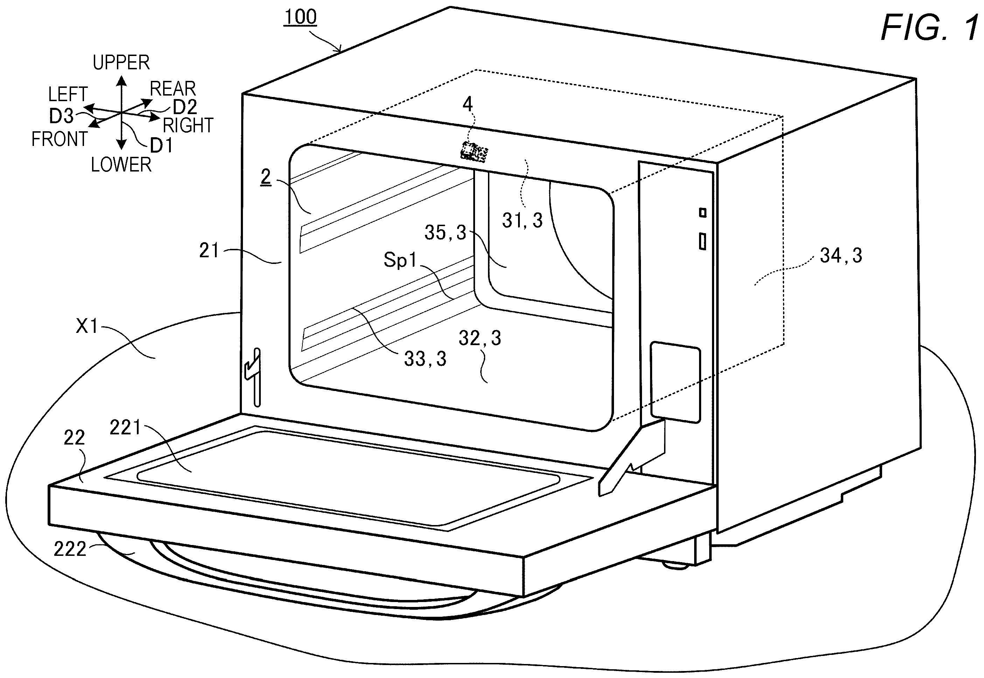

First, an outline of a heating cooker 100 according to the present embodiment will be described with reference to FIG. 1.

The heating cooker 100 according to the present embodiment heats, for example, a food, a food product, a beverage, or various other heating objects. The heating cooker 100 irradiates a heating object in a heating chamber 2 with an electromagnetic wave to heat the heating object, like a microwave oven, for example. The heating cooker 100 only needs to have a function of heating a heating object using at least an electromagnetic wave, and may have, for example, a grill function, an oven function of heating with convective heat, and/or a steam function of heating with water vapor.

The "electromagnetic wave" in the present disclosure means a physical phenomenon in which electromagnetic energy propagates in space while vibrating, and includes a radio wave and light. The heating cooker 100 irradiates a heating object in the heating chamber 2 with a microwave that is an electromagnetic wave of 2.45 GHz as an example. By this, an electromagnetic wave (microwave) vibrates a water molecule and the like in a heating object, and temperature of the entire heating object rises.

There are two types of the heating cooker 100 of this type, that is, "flat table type" and "turn table type". A flat table type heating cooker includes an antenna below a bottom surface of a heating chamber, and irradiates the inside of the heating chamber with an electromagnetic wave from the antenna while rotating the antenna, so as to efficiently diffuse the electromagnetic wave in the heating chamber to evenly heat a heating object. A turn table type heating cooker includes a turn table on which a heating object is placed in a heating chamber, and irradiates the inside of the heating chamber with an electromagnetic wave from a fixed antenna while rotating the turn table, so as to evenly heat a heating object on the turn table. In the present embodiment, as an example, the heating cooker 100 is a flat table type microwave oven.

The heating cooker 100 is, for example, an electric device that operates by receiving power supply from a power system (AC power supply). That is, the heating cooker 100 operates to heat a heating object by irradiating the heating object with an electromagnetic wave by receiving power supply.

As illustrated in FIG. 1, for example, the heating cooker 100 is used while being placed on an installation surface X1 including a shelf, a counter, or the like of a house. The heating cooker 100 stands independently on the installation surface X1 while being placed on the installation surface X1. That is, the heating cooker 100 according to the present embodiment is a self-standing and portable device, and the user can install the heating cooker 100 at an optional position on the installation surface X1.

In the present embodiment, for convenience of description, a vertical direction in a state where the heating cooker 100 can be used is defined as an up-down direction D1. Further, a left-right direction D2 is defined with reference to a direction in which the heating cooker 100 is viewed from the front, and a front-rear direction D3 is defined with the front surface side of the heating cooker 100 as the front side and the rear surface side as the rear side. However, these directions are not intended to limit a use direction (direction at the time of use) of the heating cooker 100.

The heating cooker 100 includes the heating chamber 2 capable of accommodating a heating object, and a heating source for heating the heating object. The heating source irradiates a space (inner space Sp1) in the heating chamber 2 with an electromagnetic wave to heat a heating object accommodated in the heating chamber 2.

In the present embodiment, the heating chamber 2 has a hollow rectangular parallelepiped shape, and includes a box body 21 and a door body 22. The box body 21 is formed in a box shape with one surface (front surface in the present embodiment) opened. The door body 22 is attached to the box body 21 in a state where an opening surface (front surface in the present embodiment) of the box body 21 can be opened and closed.

Here, the door body 22 is supported to be openable and closable with respect to the box body 21 by a support portion (hinge) provided in a lower portion on the front surface side of the box body 21. An upper portion of the door body 22 falls to the front side to be at an open position (see FIG. 1), and stands to the back side to be at a closed position. Furthermore, the door body 22 includes a door window 221 through which the inside of the heating chamber 2 (inner space Sp1) can be visually recognized through the door body 22, and a handle 222 that can be gripped by the user.

The door window 221 includes a double glass structure including inner glass facing the inside (inner space Sp1) of the door body 22 and outer glass facing the outside of the door body 22. The door window 221 includes punching metal which is a metal plate (or a metal sheet) having a large number of holes. Provision of the punching metal prevents an electromagnetic wave from leaking out of the heating chamber 2 through the door window 221.

As illustrated in FIG. 1, when the door body 22 is in an open state (at an open position), the inner space Sp1 in the heating chamber 2 is exposed from the front surface of the box body 21, so that a heating object can be put in and taken out of the heating chamber 2. On the other hand, when the door body 22 is in a closed state (at a closed position), the inner space Sp1 in the heating chamber 2 is in a sealed state, so that a heating object accommodated in the heating chamber 2 can be heated.

Therefore, the user first puts a heating object into the heating chamber 2 with the door body 22 opened, and closes the door body 22. In this state, the heating object in the heating chamber 2 is irradiated with an electromagnetic wave from a heating source so that the heating object is heated. Then, after the heating object is heated, the user opens the door body 22 and takes out the heating object from the heating chamber 2.

Here, the heating chamber 2 includes a panel member 3 surrounding the inner space Sp1. The panel member 3 is a member constituting an inner surface (inner side surface) of the heating chamber 2. An inner surface of the heating chamber 2 includes an upper surface (top surface), a lower surface (bottom surface), a left side surface, a right side surface, a back surface, and a front surface of the inner space Sp1. That is, the panel member 3 is provided at each portion facing the inner space Sp1 of the box body 21 and the door body 22.

In the present embodiment, as an example, as illustrated in FIG. 1, the box body 21 includes a first panel 31, a second panel 32, a third panel 33, a fourth panel 34, and a fifth panel 35 as the panel members 3. The first panel 31 constitutes an upper surface (top surface) of the inner space Sp1, and the second panel 32 constitutes a lower surface (bottom surface) of the inner space Sp1. The third panel 33 constitutes a left side surface of the inner space Sp1, the fourth panel 34 constitutes a right side surface of the inner space Sp1, and the fifth panel 35 constitutes a rear surface of the inner space Sp1.

In other words, a space surrounded by the panel member 3 is an inner space of the heating chamber 2 (that is, the inner space Sp1) capable of accommodating a heating object. The panel member 3 is made from metal so as to reflect an electromagnetic wave emitted into the heating chamber 2. That is, the panel member 3 is made from metal, reflects an electromagnetic wave with which the inner space Sp1 is irradiated, and efficiently irradiates a heating object with an electromagnetic wave.

In the present embodiment, as an example, only the box body 21 is provided with the first panel 31 to the fifth panel 35 as the panel member 3, and each of the first panel 31 to the fifth panel 35 is constituted by a metal plate having predetermined thickness. However, the panel member 3 may be divided into a plurality of members, and for example, the second panel 32, the third panel 33, the fourth panel 34, and the like may be integrally constituted.

Here, at least the first panel 31 to the fifth panel 35 as the panel member 3 are electrically connected to a grounding point electrically connected to, for example, a ground terminal of an outlet with a ground terminal. That is, as the first panel 31 to the fifth panel 35 are grounded, a shielding effect against an electromagnetic wave (here, microwave) is enhanced. Therefore, an electromagnetic wave is shielded by the panel member 3, and hardly leaks to the outside of the heating chamber 2 (to the outside of the inner space Sp1).

Further, the heating cooker 100 according to the present embodiment further includes a power supply unit, an operation unit, a control unit, and the like. Furthermore, the heating cooker 100 further includes various sensors such as a weight sensor and a temperature sensor.

The operation unit is arranged on a front surface of the door body 22, for example. The operation unit includes a plurality of buttons, dials, and the like that can be pressed and operated by the user. The operation unit receives, for example, start and stop of heating of a heating object, setting operation of heating intensity, heating time, and heating mode, and the like.

The control unit is electrically connected to a heating source, a power supply unit, an operation unit, and the like. The control unit mainly includes a computer system including one or more processors such as a central processing unit (CPU) and one or more memories such as a read only memory (ROM) and a random access memory (RAM), and executes various types of processing (information processing). The control unit controls each unit of the heating cooker 100 according to operation of the operation unit.

The heating cooker 100 according to the present embodiment further includes an imaging device 4 that captures the inner space Sp1. The imaging device 4 is a camera including an imaging element (photoelectric conversion element) such as a charge coupled device (CCD) sensor or a complementary metal-oxide-semiconductor (CMOS) sensor. The imaging device 4 including a camera includes an optical system such as a lens in addition to an imaging element, and outputs an image of the inner space Sp1 as needed.

In the present embodiment, the imaging device 4 is connected to the control unit, and an image captured by the imaging device 4 is input to the control unit regularly or irregularly. The control unit performs appropriate image processing on an image of the inside of the heating chamber 2 (inner space Sp1) to monitor a state of the inside of the heating chamber 2 to be used for favorable control of each part of the heating cooker 100.

As an example, the control unit estimates what a heating object accommodated in the heating chamber 2 is, or in what state (presence or absence of a lid) the heating object is accommodated based on an image acquired from the imaging device 4, and automatically sets heating intensity, heating time, a heating mode, and the like. Further, the control unit may use an image acquired from the imaging device 4 to detect whether a heating object is put into or taken out of the heating chamber 2, detect dirt in the heating chamber 2 (or on the door window 221), and monitor other parts (including the outside of the heating chamber 2).

Here, the imaging device 4 is fixed to the panel member 3 surrounding the inner space Sp1 such that the inner space Sp1 is included in a field of view. In the present embodiment, in particular, the imaging device 4 is fixed obliquely downward to the first panel 31 constituting an upper surface (top surface) of the inner space Sp1 of the panel member 3. By this, the imaging device 4 can capture the inner space Sp1 as looking down from obliquely above.

### [2] DETAILED CONFIGURATION AROUND IMAGING DEVICE

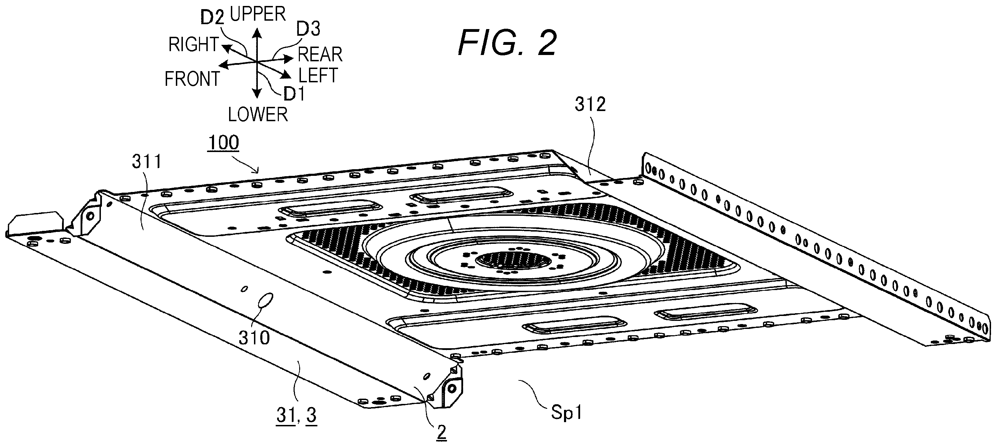

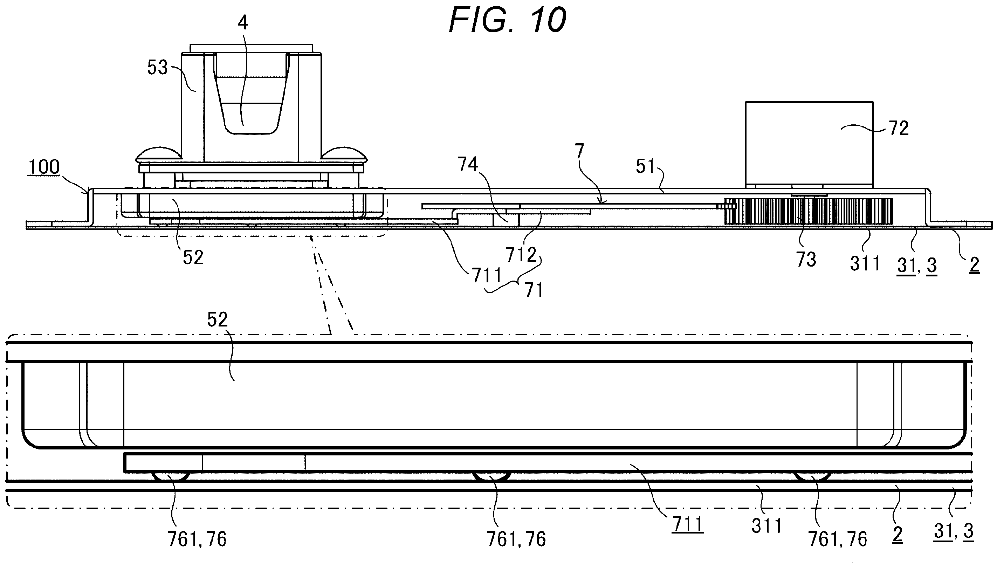

Next, a more detailed configuration around the imaging device 4 (camera) in the heating cooker 100 according to the present embodiment will be described with reference to FIGS. 2 to 10.

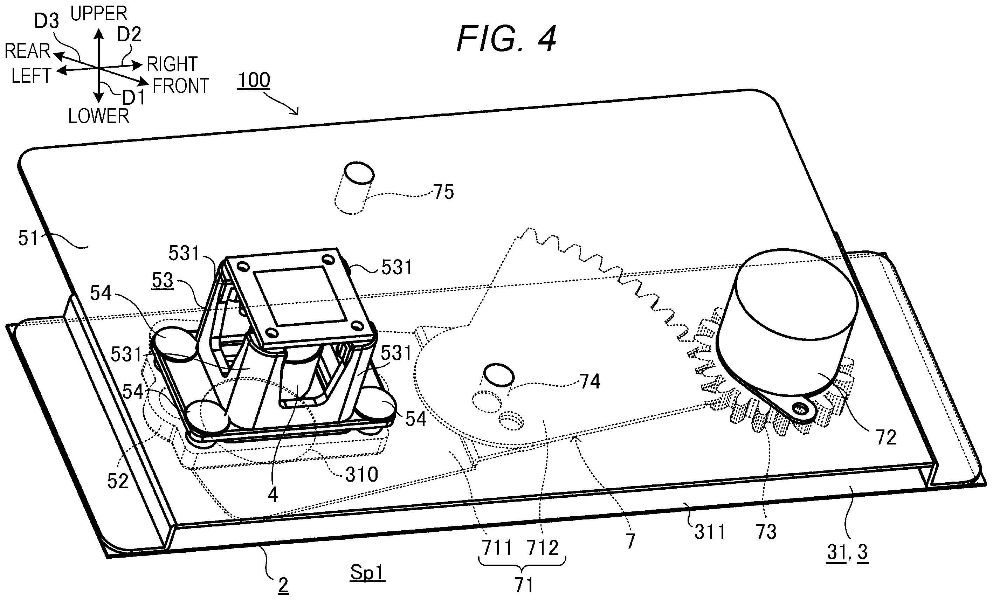

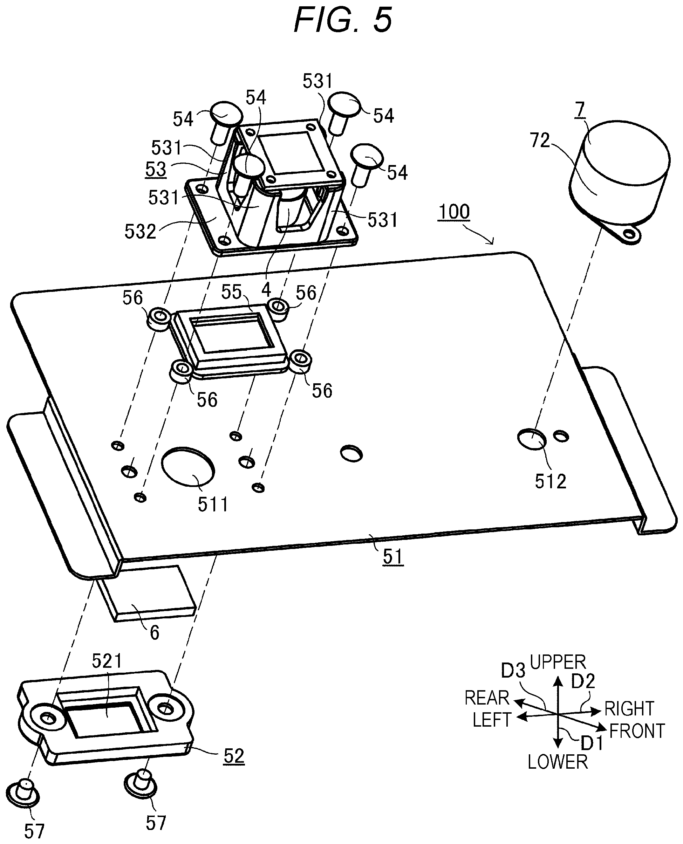

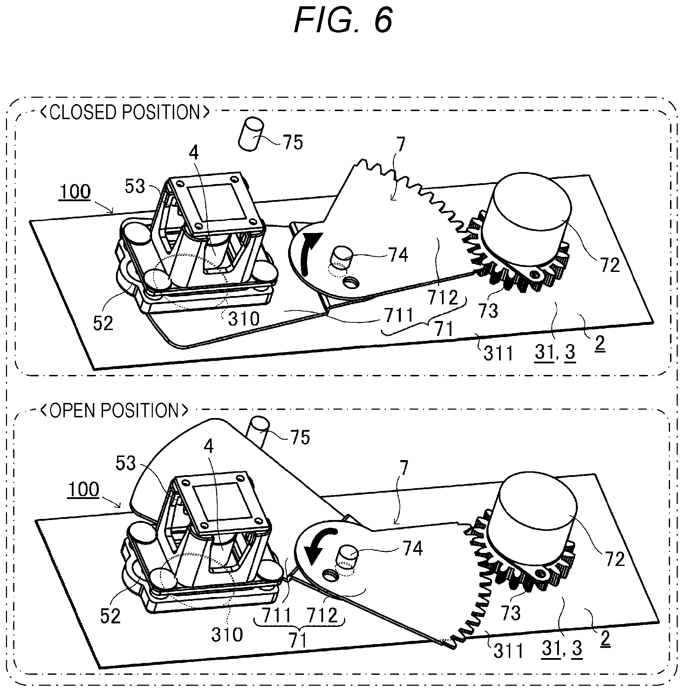

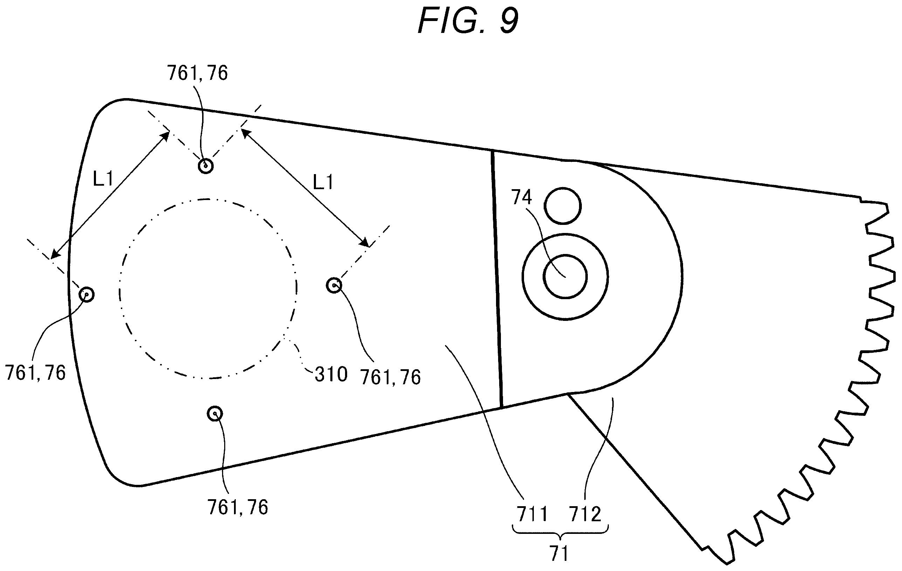

In FIGS. 2 to 10, only members around the imaging device 4 such as the first panel 31 to which the imaging device 4 is fixed, the imaging device 4, and a camera holder 53 are illustrated, and illustration of other members is appropriately omitted. Further, in FIGS. 4, 6 to 8, and 10, only a portion around the imaging device 4 is cut out and illustrated for the first panel 31. In FIGS. 5 and 9, illustration of the first panel 31 is omitted, and in FIG. 6, illustration of a support plate 51 is omitted.

As illustrated in FIGS. 2 to 5, the heating cooker 100 according to the present embodiment includes the support plate 51, a glass holder 52, a camera holder 53, a screw 54, glass 6, and the like. Further, the heating cooker 100 further includes a shutter mechanism 7 (see FIG. 4).

The imaging device 4 is fixed to a central portion in the left-right direction D2 of a front end portion of the first panel 31. Specifically, the first panel 31 is formed by bending a metal plate, and has inclined portions 311 and 312 inclined so as to be lower toward both end sides in the front-rear direction D3 at both end portions in the front-rear direction D3.

The imaging device 4 is supported by the inclined portion 311 on the front side of the first panel 31. More specifically, an opening portion 310 (see FIG. 2) is formed at a central portion in the left-right direction D2 of the inclined portion 311 of the first panel 31. The opening portion 310 is a through hole penetrating (the inclined portion 311 of) the first panel 31 in a thickness direction. Here, as an example, the opening portion 310 is opened in a circular shape. The imaging device 4 is arranged above the first panel 31, that is, outside the heating chamber 2, at a position corresponding to the opening portion 310.

Further, the imaging device 4 is arranged in a posture in which an optical axis of an optical system is inclined downward (obliquely downward) from a horizontal direction such that the optical axis of the optical system passes through substantially the center of the opening portion 310. **In** the present embodiment, as an example, the inclined portion 311 is inclined rearward by 45 degrees. For this reason, the imaging device 4 is also arranged in a posture in which an optical axis of the optical system is inclined rearward by 45 degrees with respect to the vertical direction.

By this, the imaging device 4 arranged outside the heating chamber 2 (above the first panel 31) can capture the inside of the heating chamber 2 (inner space Sp1) through the opening portion 310. That is, the imaging device 4 can capture the inner space Sp1 in a bird's-eye view manner from obliquely forward and upward.

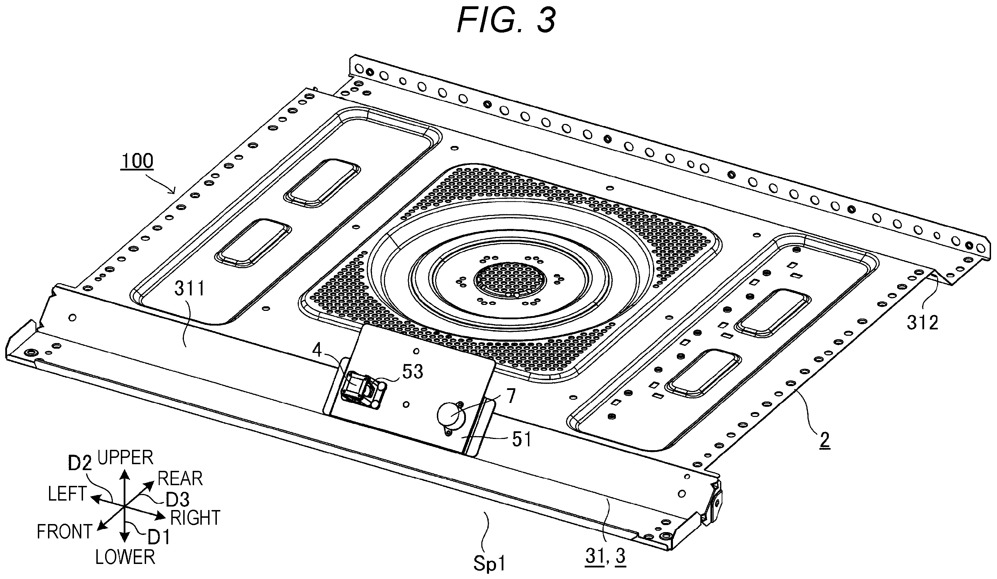

**In** the present embodiment, as illustrated in FIGS. 3 and 4, the imaging device 4 is supported above the first panel 31, that is, outside the heating chamber 2 by the camera holder 53. The camera holder 53 has, around an optical axis of the optical system of the imaging device 4, a plurality of (here, four) leg portions 531 extending along the optical axis. Here, as an example, the camera holder 53 is made from resin (resin molded product).

The camera holder 53 is attached to the panel member 3 from the outside (upper side) of the heating chamber 2 in a posture in which one end (lower end) of a plurality of the leg portions 531 faces the panel member 3 (first panel 31) side, and the imaging device 4 is attached to another end (upper end) of a plurality of the leg portions 531. Specifically, as illustrated in FIG. 5, the camera holder 53 is fixed to the support plate 51 by a plurality of (here, four) screws 54. Then, the support plate 51 is fixed to a peripheral portion of the opening portion 310 in the first panel 31 in a manner sandwiching the glass holder 52, so that the camera holder 53 is fixed to the panel member 3 (first panel 31). The support plate 51 is fixed to the first panel 31 by adhesion, welding, or a fastening tool such as a screw. The imaging device 4 is fixed to a plurality of the leg portions 531 by a fastening tool such as a screw. Here, as an example, the support plate 51 is made from metal, and is formed in a rectangular shape having length in the left-right direction D2.

For this reason, the imaging device 4 is supported by the camera holder 53 in a state of being separated from the panel member 3 (first panel 31) to the outside (upper side) of the heating chamber 2. Furthermore, since a cavity is also secured between a plurality of the leg portions 531 in the camera holder 53, cooling air can pass around the imaging device 4, and a cooling effect of the imaging device 4 can be easily obtained.

More specifically, the camera holder 53 has a frame-shaped flange portion 532 continuing to one end (lower end) of a plurality of the leg portions 531. **In** the present embodiment, as an example, the flange portion 532 is formed in a rectangular frame shape having length in the left-right direction D2. The screws 54 inserted from the outside (upper side) of the heating chamber 2 through holes formed at four corners of the flange portion 532 are fastened to the support plate 51, so that the camera holder 53 is fixed to the support plate 51.

In the support plate 51, an opening hole 511 is formed at a position corresponding to the opening portion 310 in the first panel 31. The opening hole 511 is a through hole penetrating the support plate 51 in a thickness direction. The opening hole 511 is opened in a circular shape similarly to the opening portion 310. The center of the opening hole 511 and the center of the opening portion 310 are aligned on a straight line in an optical axis direction of the optical system of the imaging device 4.

Here, an elastic member 55 is interposed between the flange portion 532 of the camera holder 53 and the support plate 51. The elastic member 55 has elasticity at least at a contact portion with the flange portion 532, and is formed in a frame shape. In the present embodiment, as an example, the elastic member 55 is made from rubber (rubber packing), and is formed in a rectangular frame shape having length in the left-right direction D2. Since the elastic member 55 is located between the flange portion 532 and the support plate 51, a gap between the flange portion 532 and the support plate 51 is filled.

Furthermore, a plurality of (here, four) spacers 56 are interposed around the elastic member 55 between the flange portion 532 of the camera holder 53 and the support plate 51. The spacer 56 secures a predetermined distance between the flange portion 532 and the support plate 51. The spacer 56 is formed in a cylindrical shape, and the screw 54 is inserted into the spacer 56.

The glass 6 is arranged so as to close the opening hole 511. The glass 6 has transmissivity with respect to at least light in a wavelength range in which the imaging device 4 has sensitivity. That is, the glass 6 has relatively high transmissivity (transparency) with respect to at least light in a visible light region. For this reason, when the glass 6 closes the opening hole 511, the imaging device 4 can capture the inner space Sp1 over the glass 6, that is, through the glass 6.

The glass 6 is attached to the support plate 51 so as to be sandwiched between the glass holder 52 and the support plate 51 in an optical axis direction of the optical system of the imaging device 4. Specifically, the glass holder 52 is a frame-shaped member having a through hole 521, and is coupled to the support plate 51 by being fixed to a peripheral portion of the opening hole 511 in the support plate 51 in a state where the glass 6 is sandwiched between the glass holder 52 and the support plate 51.

The glass holder 52 is located outside (on the upper side of) the heating chamber 2 with respect to the first panel 31, and the support plate 51 is located outside (on the upper side of) the heating chamber 2 with respect to the glass holder 52. Here, as an example, the glass holder 52 is formed in a rectangular frame shape having length in the left-right direction D2. Further, as an example, the glass holder 52 is made from resin (resin molded article).

Then, the glass holder 52 is fixed to a peripheral portion of the opening hole 511 in the support plate 51 with a pair of screws 57 in a state where the glass 6 is sandwiched between the glass holder 52 and the support plate 51. In the present embodiment, a pair of the screws 57 are inserted from the inside of the heating chamber 2, that is, from the first panel 31 side, and is fastened to the support plate 51 through the glass holder 52. By this, the glass holder 52 is fixed to the support plate 51. As a result, the glass 6 held in a form of being sandwiched between the glass holder 52 and the support plate 51 is attached to the panel member 3 (first panel 31) so as to close the opening hole 511 between the opening portion 310 and the opening hole 511.

For this reason, in a state where a shutter 71 to be described later is at an open position, the glass 6 held in a form of being sandwiched between the glass holder 52 and the support plate 51 is exposed to the inside (lower side) of the heating chamber 2 through the through hole 521 (and the opening portion 310), and is exposed to the outside (upper side) of the heating chamber 2 through the opening hole 511. Therefore, in a state where the shutter 71 is at an open position, the imaging device 4 can capture the inner space Sp1 over the glass 6 through the opening hole 511, the through hole 521, and the opening portion 310.

In the heating cooker 100 according to the present embodiment, the shutter mechanism 7 is supported by the support plate 51 to which the camera holder 53 and the like are fixed. That is, the support plate 51 is a member that supports the shutter mechanism 7.

As illustrated in FIGS. 4 and 6, the shutter mechanism 7 includes the shutter 71, a drive unit 72, a drive gear 73, a rotation shaft 74, and a regulation pin 75. The shutter mechanism 7 is configured to be switchable between a state in which the opening portion 310 is closed ("closed position" in FIG. 6) and a state in which the opening portion 310 is opened ("open position" in FIG. 6) by driving the shutter 71.

That is, as illustrated in FIG. 6, the shutter 71 is a member movable between the closed position and the open position. The "closed position" mentioned here is a position of the shutter 71 when the shutter 71 closes the opening portion 310 of the panel member 3 (first panel 31). On the other hand, the "open position" mentioned here is a position of the shutter 71 when the shutter 71 opens the opening portion 310 of the panel member 3 (first panel 31). That is, the shutter 71 opens and closes the opening portion 310 provided in the panel member 3 by moving between the closed position and the open position.

The term "closed" used in the present disclosure means a state in which the opening portion 310 is closed by the shutter 71 when the opening portion 310 is viewed from the inside (lower side) of the heating chamber 2, and includes, for example, not only an aspect of closing without a gap like sealing, but also an aspect of simply shielding. That is, the shutter 71 only needs to face a peripheral portion of the opening portion 310 in the panel member 3 by being located at least in front of the imaging device 4 (actually, the glass 6 located in front of the imaging device 4) at the closed position.

Further, the term "open" used in the present disclosure means a state in which the opening portion 310 is not closed by the shutter 71 when the opening portion 310 is viewed from the inside (lower side) of the heating chamber 2. That is, the shutter 71 only needs to be retracted at least from before the imaging device 4 (actually, the glass 6 located in front of the imaging device 4) at the open position.

The drive unit 72 is a device that generates power for driving the shutter 71. The drive unit 72 is supported by the support plate 51. The drive unit 72 is controlled by an electric signal from the control unit to drive the shutter 71 and move the shutter 71 to the closed position or the open position. **In** the present embodiment, as an example, the drive unit 72 is an electric motor such as a stepping motor that can rotate at least bidirectionally. The drive unit 72 may be, for example, a geared motor, a linear motor, or another actuator.

The drive gear 73 is a member that transmits power of the drive unit 72 to the shutter 71. **In** the present embodiment, the drive gear 73 is a pinion gear that is coupled to an output shaft of the drive unit 72 and rotates bidirectionally according to rotation of the drive unit 72.

The rotation shaft 74 is a shaft member serving as a rotation center of the shutter 71. The rotation shaft 74 is supported by the support plate 51. **In** the present embodiment, as an example, the rotation shaft 74 is a pin-shaped member and has length along an optical axis direction of the optical system of the imaging device 4. The rotation shaft 74 passes through a central portion of the shutter 71 to rotatably support the shutter 71.

The regulation pin 75 is a member that regulates a moving range of the shutter 71. The regulation pin 75 is supported by the support plate 51. **In** the present embodiment, as an example, the regulation pin 75 is a pin-shaped member and has length along an optical axis direction of the optical system of the imaging device 4. The regulation pin 75 is arranged at a position facing the shutter 71 in a moving direction (rotation direction) of the shutter 71, and comes into contact with the shutter 71 to regulate a moving range of the shutter 71. As an example, the regulation pin 75 regulates only movement of the shutter 71 in one direction (here, counterclockwise as viewed from the outside of the heating chamber 2), so as to regulate a moving range on the open position side.

With the configuration described above, the shutter mechanism 7 closes the opening portion 310 in a state where the shutter 71 is at the closed position. Then, the shutter mechanism 7 moves the shutter 71 to the open position by the drive unit 72 rotating the shutter 71 via the drive gear 73 from the state where the shutter 71 is at the closed position. Here, when viewed from the outside (upper side) of the heating chamber 2, the shutter 71 rotates clockwise (in a direction of a thick arrow in FIG. 6) around the rotation shaft 74 until the shutter 71 comes into contact with the regulation pin 75, so that the shutter 71 moves from the closed position to the open position.

The shutter mechanism 7 opens the opening portion 310 in a state where the shutter 71 is at the open position. Then, the shutter mechanism 7 moves the shutter 71 to the closed position by the drive unit 72 rotating the shutter 71 via the drive gear 73 from the state where the shutter 71 is at the open position. Here, when viewed from the outside (upper side) of the heating chamber 2, the shutter 71 rotates counterclockwise (in a direction of a thick arrow in FIG. 6) around the rotation shaft 74, so that the shutter 71 moves from the open position to the closed position.

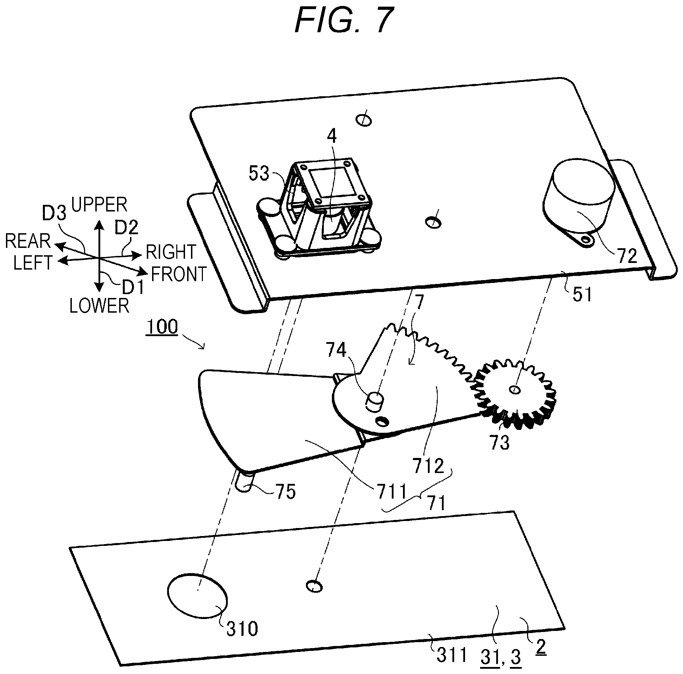

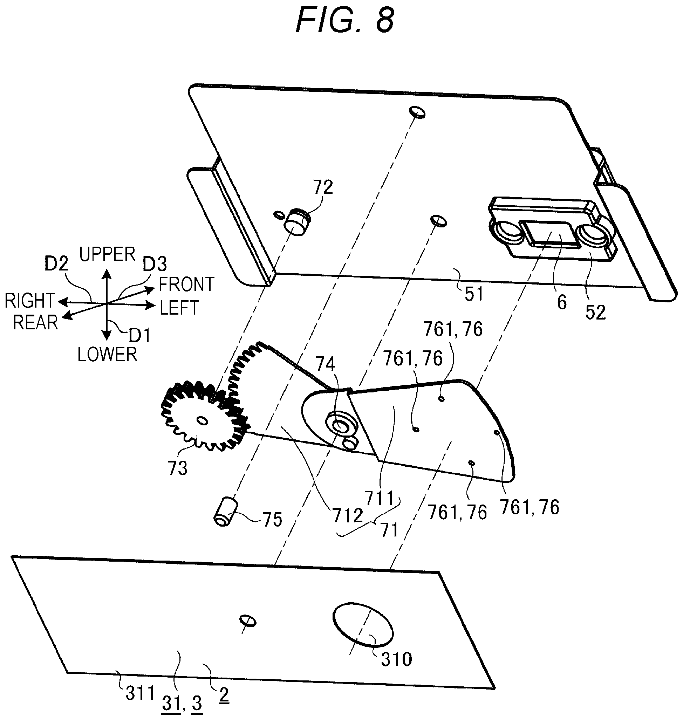

More specifically, as illustrated in FIGS. 7 and 8, among components of the shutter mechanism 7, the shutter 71, the drive gear 73, the rotation shaft 74, and the regulation pin 75 are arranged between the support plate 51 and the panel member 3 (first panel 31). In other words, the shutter 71, the drive gear 73, the rotation shaft 74, and the regulation pin 75 are arranged on the panel member 3 (first panel 31) side of the support plate 51. On the other hand, the drive unit 72 is arranged on the side opposite to the panel member 3 (first panel 31) on the support plate 51.

Here, among components of the shutter mechanism 7, at least the shutter 71 is made from a conductive member. In other words, at least the shutter 71 of the shutter mechanism 7 has conductivity. In the present embodiment, as an example, among components of the shutter mechanism 7, the shutter 71, the drive gear 73, the rotation shaft 74, and the regulation pin 75 are all made from conductive metal.

The shutter 71 includes an opening and closing portion 711 and a gear portion 712. The opening and closing portion 711 and the gear portion 712 are joined and integrated by an appropriate joining part using welding, bonding, or a fastening tool such as a screw, and constitute the shutter 71 having a single plate shape. The shutter 71 is rotatably supported by the rotation shaft 74 at a joint portion between the opening and closing portion 711 and the gear portion 712.

The opening and closing portion 711 is a plate-like member formed in a substantially fan shape as viewed from one side in an optical axis direction of the optical system of the imaging device 4, and is configured to be able to appear and disappear between the panel member 3 (first panel 31) and the glass holder 52 as the shutter 71 rotates. By this, when the shutter 71 is at the closed position, the opening and closing portion 711 is inserted between the panel member 3 (first panel 31) and the glass holder 52 to close the opening portion 310. On the other hand, when the shutter 71 is at the open position, the opening and closing portion 711 is retracted from between the panel member 3 (first panel 31) and the glass holder 52 to open the opening portion 310.

The gear portion 712 is a plate-like member formed in a substantially fan shape when viewed from one side in an optical axis direction of the optical system of the imaging device 4, and is a member that receives power from the drive unit 72. The gear portion 712 constitutes a spur gear having a gear (external tooth) on an outer peripheral portion. The gear portion 712 meshes with the drive gear 73, and the entire shutter 71 including the gear portion 712 rotates about the rotation shaft 74 as the drive unit 72 rotates the drive gear 73.

By this, the drive unit 72 rotates the drive gear 73 and rotates the gear portion 712, so that the opening and closing portion 711 can move forward and backward with respect to a space between the panel member 3 (first panel 31) and the glass holder 52, and the opening and closing portion 711 opens and closes the opening portion 310.

If the shutter 71 is not grounded or the like and is in an electrically floating state, shielding performance of the shutter 71 against an electromagnetic wave is not sufficient even at the closed position, and in some cases, there is a possibility that an electromagnetic wave leaks out of the heating chamber 2 through the opening portion 310. Therefore, in the present embodiment, the shutter 71 is electrically connected to at least a part of the panel member 3 (first panel 31) to have the same potential as the panel member 3, so as to improve shielding performance of the shutter 71 against an electromagnetic wave and prevent an electromagnetic wave from leaking out of the heating chamber 2 through the opening portion 310.

In short, the heating cooker 100 according to the present embodiment includes the heating chamber 2, the imaging device 4, and the shutter 71. The heating chamber 2 has the panel member 3 surrounding the inner space Sp1 capable of accommodating a heating object, and heats a heating object using an electromagnetic wave. The imaging device 4 is arranged outside the heating chamber 2, and captures the inner space Sp1 through the opening portion 310 formed in a part of the panel member 3. The shutter 71 is movable between the closed position where the shutter 71 closes the opening portion 310 and the open position where the shutter 71 opens the opening portion 310. Here, the shutter 71 is electrically connected to the panel member 3 at least when the shutter 71 is at the closed position.

That is, the shutter 71 has conductivity, and is electrically connected to the panel member 3 (here, the first panel 31) at least when the shutter 71 is at the closed position. As described above, as the shutter 71 at the closed position is electrically connected to the panel member 3, the shutter 71 has the same potential as the panel member 3, and shielding performance of the shutter 71 against an electromagnetic wave (microwave) is improved. Therefore, in the heating cooker 100 according to the present embodiment, the shutter 71 more reliably prevents an electromagnetic wave from leaking out of the heating chamber 2 through the opening portion 310, and an electromagnetic wave is less likely to reach the imaging device 4. Therefore, the heating cooker 100 according to the present embodiment has an advantage that the imaging device 4 can be protected from an electromagnetic wave, and the imaging device 4 is less likely to deteriorate.

Further, in the heating cooker 100 according to the present embodiment, opening and closing of the shutter 71 is controlled in conjunction with irradiation with an electromagnetic wave in the heating chamber 2. That is, the control unit controls the drive unit 72 in conjunction with electromagnetic wave irradiation operation in the heating chamber 2 to open and close the shutter 71 in accordance with an electromagnetic wave irradiation state in the heating chamber 2.

Specifically, the shutter 71 is at the closed position at least during an irradiation period during which a heating object is irradiated with an electromagnetic wave. In short, the opening portion 310 is closed by the shutter 71 when the shutter 71 is at the closed position in a period (irradiation period) in which an electromagnetic wave is emitted in the inner space Sp1 of the heating chamber 2.

By this, an electromagnetic wave emitted to a heating object in the heating chamber 2 is blocked by the shutter 71, and an electromagnetic wave is prevented from leaking to the outside of the heating chamber 2 through the opening portion 310.

Furthermore, in the present embodiment, the shutter 71 is at the open position during a non-irradiation period in which a heating object is not irradiated with an electromagnetic wave. That is, although the shutter 71 is at the closed position during irradiation of a heating object with an electromagnetic wave, when irradiation with an electromagnetic wave is ended, the control unit moves the shutter 71 to the open position by controlling the drive unit 72. Accordingly, in the inner space Sp1 inside the heating chamber 2, the opening portion 310 is opened by the shutter 71 being at the open position during a period (non-irradiation period) during which no electromagnetic wave is emitted.

Accordingly, during a period (non-irradiation period) in which the heating chamber 2 is not irradiated with an electromagnetic wave, the imaging device 4 can capture the inner space Sp1. In addition, at this time, since irradiation with an electromagnetic wave is not performed in the inside of the heating chamber 2, deterioration of the imaging device 4 due to an electromagnetic wave can be avoided.

Further, in the present embodiment, as illustrated in FIGS. 8 to 10, the shutter 71 has a conductive portion 76 that comes into contact with a peripheral portion of the opening portion 310 in the panel member 3 (first panel 31) and is electrically connected to the panel member 3 (first panel 31) at least when the shutter 71 is at the closed position. That is, the shutter 71 is electrically connected to the panel member 3 (first panel 31) as the conductive portion 76 is in contact with a peripheral portion of the opening portion 310 in the panel member 3 (first panel 31). The conductive portion 76 only needs to have a structure capable of electrically connecting the shutter 71 and the panel member 3, and is, for example, an electrode, a terminal, or the like.

By this, the shutter 71 is directly connected to the panel member 3 as the conductive portion 76 is in contact with the panel member 3. Therefore, a structure for electrically connecting the shutter 71 and the panel member 3 can be simplified, and electrical resistance between the shutter 71 and the panel member 3 can be suppressed to be small.

Here, the conductive portion 76 includes a plurality of contacts 761. In the present embodiment, as an example, the conductive portion 76 includes four of the contacts 761. Each of four of the contacts 761 is a protruding contact that protrudes toward the panel member 3 (first panel 31) from a surface (lower surface) facing the panel member 3 (first panel 31) in the opening and closing portion 711 of the shutter 71.

By this, as compared with a case where the shutter 71 is electrically connected to the panel member 3 at one of the contact 761, the shutter 71 and the panel member 3 can be stably connected at a plurality of the contacts 761, and electrical resistance between the shutter 71 and the panel member 3 can be suppressed to be small.

Furthermore, in the present embodiment, an interval between a plurality of the contacts 761 is 1/4 or less of a wavelength of an electromagnetic wave. Specifically, as illustrated in FIG. 9, in the shutter 71 at the closed position, four of the contacts 761 are arranged in a peripheral portion of the opening portion 310 in the panel member 3 (first panel 31) in a manner surrounding the opening portion 310. Here, as an example, four of the contacts 761 are arranged at equal intervals (90 degree intervals) on a concentric circle of the opening portion 310. Then, a distance L1 between a pair of the contacts 761 adjacent to each other in a circumferential direction, that is, a minimum distance between a plurality of the contacts 761 is set to be equal to or less than "λ/4" which is 1/4 of a wavelength λ of an electromagnetic wave (microwave).

By this, an electromagnetic wave is less likely to leak from a gap between a pair of the contacts 761 adjacent to each other, and an electromagnetic wave emitted to a heating object in the heating chamber 2 is blocked by the shutter 71, so that an electromagnetic wave is prevented from leaking to the outside of the heating chamber 2 through the opening portion 310.

Further, the shutter 71 is pressed against the panel member 3 (first panel 31) side at least when the shutter 71 is at the closed position. Specifically, the shutter 71 has a shape in which an end portion (left end portion) on the side opposite to the rotation shaft 74 of the opening and closing portion 711 including a metal plate is along the panel member 3 side. When the shutter 71 is assembled between the support plate 51 and the panel member 3, the opening and closing portion 711 is elastically deformed, and the conductive portion 76 is pressed against the panel member 3 (first panel 31) by the elasticity.

As a result, the shutter 71 can be reliably brought into contact with a peripheral portion of the opening portion 310 in the panel member 3 (first panel 31), and an electromagnetic wave is less likely to leak from a gap between the shutter 71 and the panel member 3. Therefore, an electromagnetic wave emitted to a heating object in the heating chamber 2 is blocked by the shutter 71, and an electromagnetic wave is prevented from leaking to the outside of the heating chamber 2 through the opening portion 310.

Further, in the present embodiment, the shutter 71 moves between the closed position and the open position along a peripheral portion of the opening portion 310 in the panel member 3 (first panel 31). An aspect of movement here includes rotation, sliding (parallel movement), a combination of these, and the like. **In** the present embodiment, as described above, the shutter 71 moves between the closed position and the open position by rotating about the rotation shaft 74.

By this, clearance between the shutter 71 and a peripheral portion of the opening portion 310 in the panel member 3 (first panel 31) can be maintained to be constant at all times. Therefore, an electromagnetic wave emitted to a heating object in the heating chamber 2 is blocked by the shutter 71, and an electromagnetic wave is prevented from leaking to the outside of the heating chamber 2 through the opening portion 310.

### [3] VARIATION

Hereinafter, a variation of the first embodiment will be listed. Variations described below can be appropriately combined and applied.

The opening portion 310 only needs to be arranged at any position of the panel member 3, and may be provided, for example, in a rear end portion of the first panel 31, or may be provided in the second panel 32, the third panel 33, the fourth panel 34, or the fifth panel 35. Furthermore, in a case where the imaging device 4 is arranged on the door body 22, the opening portion 310 may be provided in a panel member constituting an inner surface of the door body 22.

Further, various components such as the glass holder 52 and the camera holder 53 are not limited to those made from resin, and for example, at least a part of such components may be made from metal or the like. Further, the support plate 51 is not limited to one that is made from metal, and for example, at least a part of the support plate 51 may be made from resin (resin molded product), or may be an insert-molded product in which a metal plate is inserted into a resin molded product.

Further, the elastic member 55 is not limited to one that is made from rubber, and may include, for example, a leaf spring, a coil spring, or another elastic body.

### SECOND EMBODIMENT

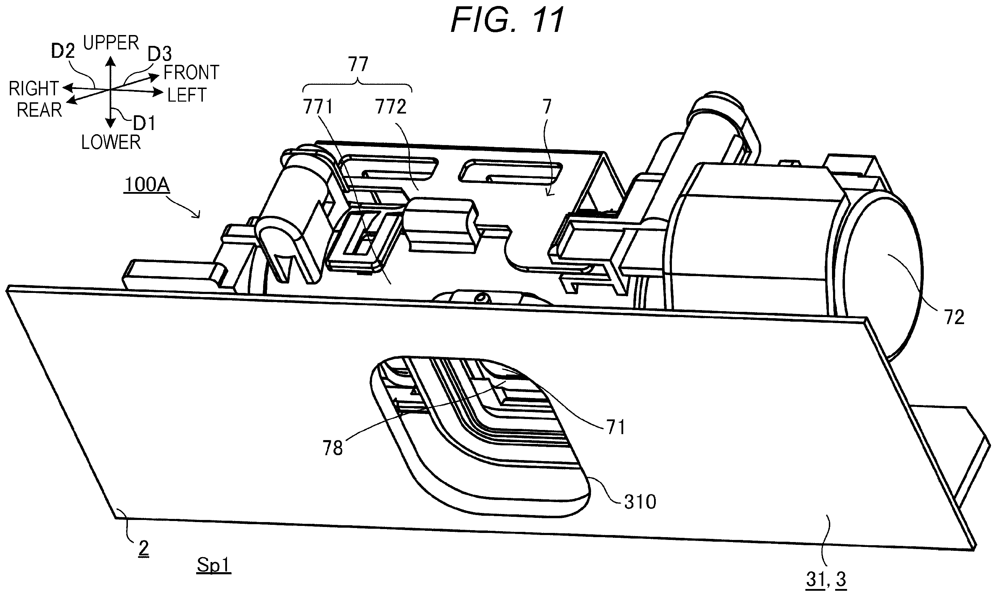

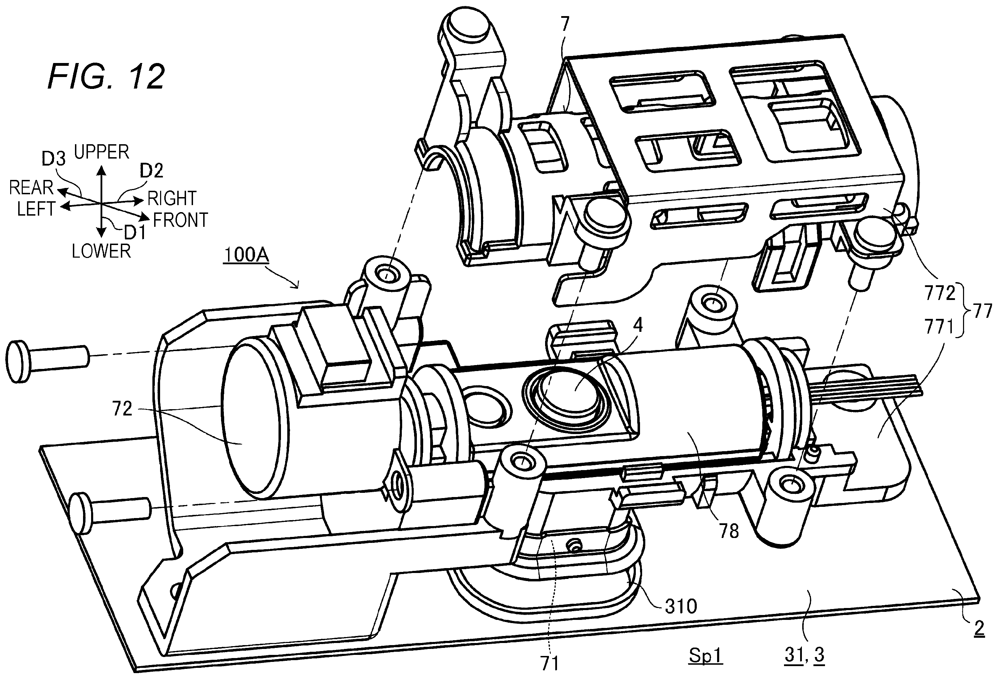

As illustrated in FIGS. 11 to 13, in a heating cooker 100A according to the present embodiment, a configuration of the shutter mechanism 7 differs from that in the first embodiment. Hereinafter, a configuration similar to that of the first embodiment is denoted by a common reference numeral, and appropriately omitted from description.

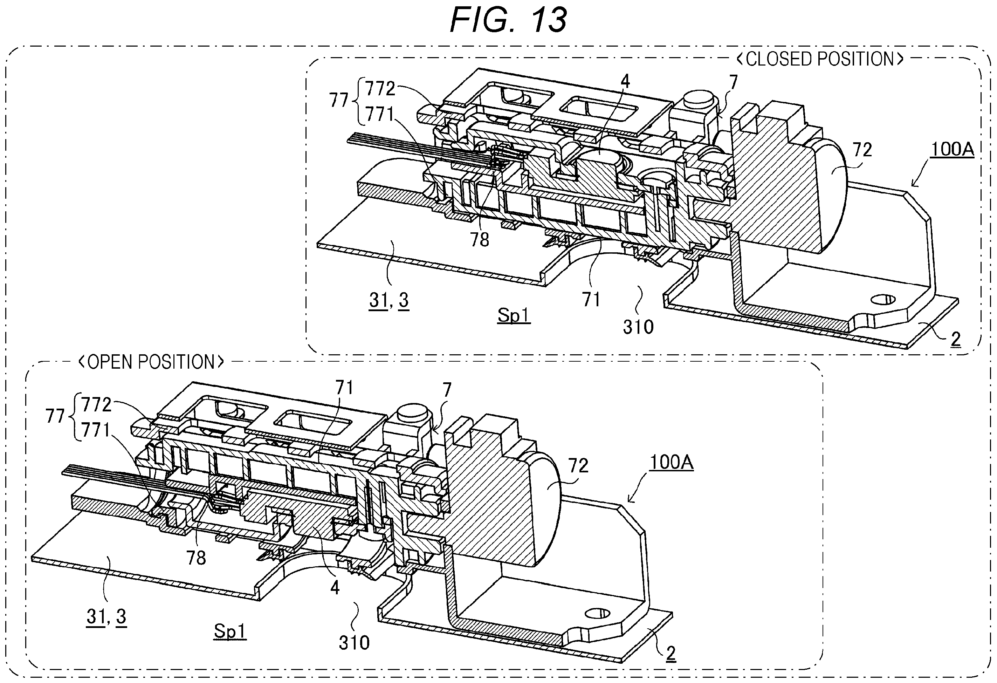

In the present embodiment, the shutter 71 constitutes a rotation body 78 together with the imaging device 4. The rotation body 78 is rotatable between a non-imaging posture (see the upper part of FIG. 13) in which the shutter 71 faces the opening portion 310 to be located at the closed position and an imaging posture (see the lower part of FIG. 13) in which the imaging device 4 faces the opening portion 310.

Specifically, the shutter mechanism 7 includes the rotation body 78 and a support body 77 that rotatably supports the rotation body 78. The rotation body 78 is formed in a substantially columnar shape, and the imaging device 4 and the shutter 71 are arranged on the front and back of an outer peripheral surface of the rotation body 78. The support body 77 is formed in a substantially cylindrical shape and is fixed to the panel member 3 (first panel 31).

In the shutter mechanism 7, the rotation body 78 is rotated by 180 degrees by the drive unit 72, so that the shutter 71 of the rotation body 78 alternately moves between the closed position and the open position as illustrated in FIG. 13. That is, in a state where the shutter 71 is at the closed position, the imaging device 4 is directed to the side opposite to the opening portion 310, and in a state where the shutter 71 is at the open position, the imaging device 4 is directed to the opening portion 310.

According to this configuration, as the shutter 71 moves between the closed position and the open position, a direction of the imaging device 4 also changes. Therefore, in the non-imaging posture in which the shutter 71 is at the closed position, an electromagnetic wave emitted to a heating object in the heating chamber 2 hardly reaches the imaging device 4. Therefore, the imaging device 4 can be more reliably protected from an electromagnetic wave.

A configuration of the second embodiment can be employed by being appropriately combined with various configurations (including a variation) described in the first embodiment.

### SUPPLEMENTARY NOTE OF INVENTION

Hereinafter, an outline of the invention extracted from the above-described embodiment will be additionally described. Note that each configuration and each processing function described in a supplementary note below can be selected and optionally combined.

### SUPPLEMENTARY NOTE 1

A heating cooker including:
a heating chamber having a panel member surrounding an inner space capable of accommodating a heating object, the heating chamber being configured to heat the heating object by using an electromagnetic wave;
an imaging device that is arranged outside the heating chamber and configured to capture the inner space through an opening portion formed in a part of the panel member; and
a shutter configured to be movable between a closed position at which the shutter closes the opening portion and an open position at which the shutter opens the opening portion, in which
the shutter is electrically connected to the panel member at least when the shutter is at the closed position.

### SUPPLEMENTARY NOTE 2

The heating cooker according to Supplementary note 1, in which the shutter is at the closed position at least during an irradiation period during which the electromagnetic wave is emitted to the heating object.

### SUPPLEMENTARY NOTE 3

The heating cooker according to Supplementary note 1 or 2, in which the shutter is configured to move along a peripheral portion of the opening portion of the panel member between the closed position and the open position.

### SUPPLEMENTARY NOTE 4

The heating cooker according to any of Supplementary notes 1 to 3, in which
the shutter constitutes a rotation body together with the imaging device, and
the rotation body is configured to be rotatable between a non-imaging posture in which the shutter faces the opening portion to be located at the closed position and an imaging posture in which the imaging device faces the opening portion.

### SUPPLEMENTARY NOTE 5

The heating cooker according to any of Supplementary notes 1 to 4, in which the shutter includes a conductive portion that is in contact with a peripheral portion of the opening portion of the panel member and is electrically connected to the panel member at least when the shutter is at the closed position.

### SUPPLEMENTARY NOTE 6

The heating cooker according to Supplementary note 5, in which the conductive portion includes a plurality of contacts.

### SUPPLEMENTARY NOTE 7

The heating cooker according to Supplementary note 6, in which an interval between the plurality of contacts is 1/4 or less of a wavelength of the electromagnetic wave.

### SUPPLEMENTARY NOTE 8

The heating cooker according to any of Supplementary notes 1 to 7, in which the shutter is pressed against the panel member side at least when the shutter is at the closed position.

## Claims

1. A heating cooker comprising:
a heating chamber having a panel member surrounding an inner space capable of accommodating a heating object, the heating chamber being configured to heat the heating object by using an electromagnetic wave;
an imaging device that is arranged outside the heating chamber and configured to capture the inner space through an opening portion formed in a part of the panel member; and
a shutter configured to be movable between a closed position at which the shutter closes the opening portion and an open position at which the shutter opens the opening portion, wherein
the shutter is electrically connected to the panel member at least when the shutter is at the closed position.

2. The heating cooker according to claim 1, wherein the shutter is at the closed position at least during an irradiation period during which the electromagnetic wave is emitted to the heating object.

3. The heating cooker according to claim 1 or 2, wherein the shutter is configured to move along a peripheral portion of the opening portion of the panel member between the closed position and the open position.

4. The heating cooker according to claim 1 or 2, wherein
the shutter constitutes a rotation body together with the imaging device, and
the rotation body is configured to be rotatable between a non-imaging posture in which the shutter faces the opening portion to be located at the closed position and an imaging posture in which the imaging device faces the opening portion.

5. The heating cooker according to claim 1 or 2, wherein the shutter includes a conductive portion that is in contact with a peripheral portion of the opening portion of the panel member and is electrically connected to the panel member at least when the shutter is at the closed position.

6. The heating cooker according to claim 5, wherein the conductive portion includes a plurality of contacts.

7. The heating cooker according to claim 6, wherein an interval between the plurality of contacts is 1/4 or less of a wavelength of the electromagnetic wave.

8. The heating cooker according to claim 1 or 2, wherein the shutter is pressed against the panel member side at least when the shutter is at the closed position.
